# EUROPEAN PATENT SPECIFICATION

(11) **EP 2 199 117 B1**
(45) Date of publication and mention of the grant of the patent: **21.12.2011**
(21) Application number: 10158452.2
(22) Date of filing: 13.06.2006
(51) Int. Cl.: B60C 27/08, B21L 3/02

(54) **Tire chains for vehicles comprising studs**
Reifenketten ausgerüstet mit Spikes für Fahrzeuge
Chaînes de pneus équipées des crampons pour véhicules

(30) Priority: 13.06.2005 NO 20052853
(43) Date of publication of application: 23.06.2010
(62) Divisional of application: 06757867.4
(73) Proprietor: Gunnebo-Anja Industrier AS, Sundebru 4993 Sundebru (NO)
(72) Inventor: Røed, Morten, 4993 Sundebru (NO)
(74) Representative: Byklum, Knut Birger

(56) References cited:
- GB-A- 512 837
- US-A- 2 184 127
- US-A- 2 223 942
- US-A- 4 361 178

## Description

The present invention relates to a traction chain for installation onto a vehicle tire in order to increase the gripping, or traction, capacity against the ground, usually during snow and icy road conditions, which traction chain comprises lateral links that in use bear against the tire tread surface and have attached studs protruding outwardly relative to the tire tread, according to claim 1.

Such a traction chain having attached studs, could be manufactured in which twisted links of infinite lengths are guided into an automated stud welding machine and are guided into place in a welding station. Further, precut studs are inserted into a magazine and are one by one put in place in a fixture in the form of a welding electrode. The welding electrode then urges the stud against the chain link, electric power is supplied to the welding electrode, and a resistance welding takes place and a melting zone is created between the stud and the link.

However, such a method of manufacturing a traction chain does not form part of the present invention.

Tire chains, or traction chains, have been used on vehicle tires for a long time. Before the studded tires appeared, they were also frequently used on passenger cars during the winter season, while today they are rarely used other than at a pinch during heavy snowfall and similar. However, for heavier vehicles, like lorries, trucks, tractors, forestry machinery, construction machine and similar, tire chains are standard equipment that are often used during wintry conditions.

Traction chains for vehicle tires have both been of the smooth type and of the type having welded studs projecting radially outwards when the traction chain is installed on the tire. The studs are normally confined to the transversally extending links of the traction chain. Such studs have traditionally been manufactured of rod steel stock having circular transversal cross section, normally having steel grade 22MnB4, IB20 or corresponding material. The rod steel stock proceeds through a severing machine that produces pieces in vast quantities and the pieces are cut into suited, predetermined lengths and have circular transversal cross section. Then the pieces are welded by electric resistance welding at the actual chain link, normally limited to the individual links of the transversal, or lateral, chain links, and with that the pieces have become to studs.

One object with the present invention is to provide a new generation traction chains having studs that provide still better road traction on slippery road surface, like snow and ice. Also, the new traction chain is supposed to have approximately the same cost level as conventional studded traction chains. The traction chain can partly be produced after the same methods as are used on conventional traction chains today. Further, the durability of the traction chain, i.e. the time it takes before the studs are worn down, shall be at least as good as previously.

A traction chain according to the preamble of claim 1 is disclosed in US-A-4 361 178.

According to the present invention, a traction chain of the introductory said kind is provided, which is distinguished in that the attached studs have a sharp edged, equilateral polygonal transversal cross section area.

From SE 0302888 is a studded tire known, in which the traditional cylindrical hard metal stud is replaced by a stud having square transversal cross section.

In conformity with what is alleged in this publication, this new configuration of the studs has provided the surprising advantage that the grip, or traction, against the ground surface, like ice and firmly stuffed snow, has increased considerably. The road traction increases considerably relative to traditional tire chains because the tips of the studs in this way works out a wider grip notch in the ice or similar on the ground.

The configuration of the studs makes the automation of the welding process simple to perform. Thus an efficient and qualitative equal production is secured. The configuration of the studs and the welding bead ensure that the chain links all the time are kept correctly oriented, even when the traction chain is hanging unused on the vehicle. Because the transversal cross section area of an angular stud is larger than that of a corresponding circular stud, a longer operating life time and thus better total economy is achieved. Even so, the persons involved have been working especially with a way to find a new method to orient the square studs so that each stud gets into same position with regard to the corners every time.

In a first preferable embodiment of the invention, the transversal cross sectional area is quadratic. The edge itself may be absolute, sharply straight edged or exhibit a minor roundness or describe a small radius.

In a second preferable embodiment of the invention, the transversal cross section area is an equilateral triangle

In another embodiment of the invention, the transversal cross section area is an equilateral pentagon.

In still another embodiment of the invention, the transversal cross section area is an equilateral hexagon.

In a variant of the embodiments that are mentioned above, the stud has a tapered, truncated shape, preferably straight truncated.

Preferably, the stud is installed or attached to the link so that an edge of the stud is pointing in the traveling direction of the vehicle, or in the rolling direction of the tire, which is particularly of importance for a stud having triangular or square cross sectional area.

Other and further objects, features and advantages will appear from the following description of preferred embodiments of the invention, which is given for the purpose of description, and given in context with the appended drawings where:
Fig. 1 shows in perspective view a section of a lateral link of a twisted traction chain for vehicle tires according to the present invention,
Fig. 2 shows in perspective view an individual link of the lateral link according to fig. 1,
Fig. 3 shows in perspective view a single stud according to the invention for installation to the lateral link according to figure 1,
Fig. 4A and 4B show two possible variants of the cross section area of an angular stud,
Fig. 5 shows in perspective view one embodiment of the lateral link according to the invention in which the individual links are straight (not twisted), and
Fig. 6 shows in perspective view the complete lateral link according to figure 1, somewhat stylistic.

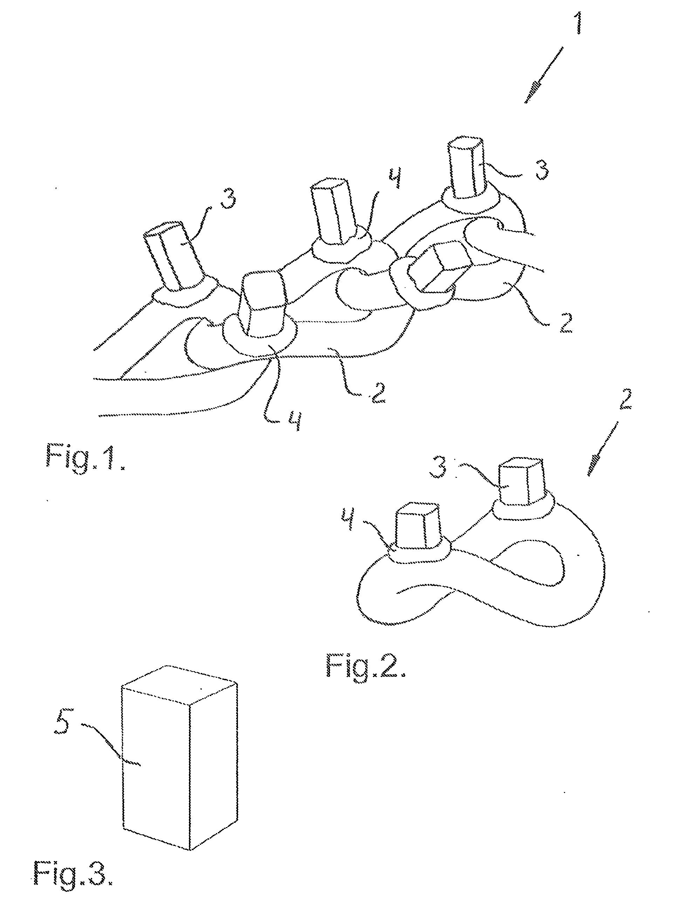

Reference is made to figure 1 where a section of a lateral, or transversal, link 1 of a vehicle traction chain is shown. The lateral link 1 is assembled of individual links 2, here an embodiment where the individual links 2 are of twisted type, is shown. Each individual link 2 has welded thereto studs 3 (also termed spikes). As illustrated, each individual stud 3 has a square appearance, and more exactly approximately quadratic cross section area. How each stud 3 is welded to the individual link 2 can either be by random or predetermined orientation. Normally the studs 3 are welded by electric resistance welding onto the actual chain link 2, as said, usually limited to the individual links 2 of the lateral link 1. By the electric resistance welding, the stud 3 is, at the end which abuts the individual link 2, melted onto the link 2 locally and forms a welding bead 4 of melted metal that circumscribes the root of the stud 3, as shown in figure 1.

Figure 2 shows one individual twisted chain link 2 isolated from the lateral link 1 and with two studs 3 fixedly welded thereto. Such studs 3 normally have a steel grade of 22MnB4, IB20 or similar.

Figure 3 shows one single metal piece 5 in the form of a parallelepiped as produced from such a rod steel stock. It is to be understood that the metal piece 5 succeeds to the stud 3 when welded to a chain link 2.

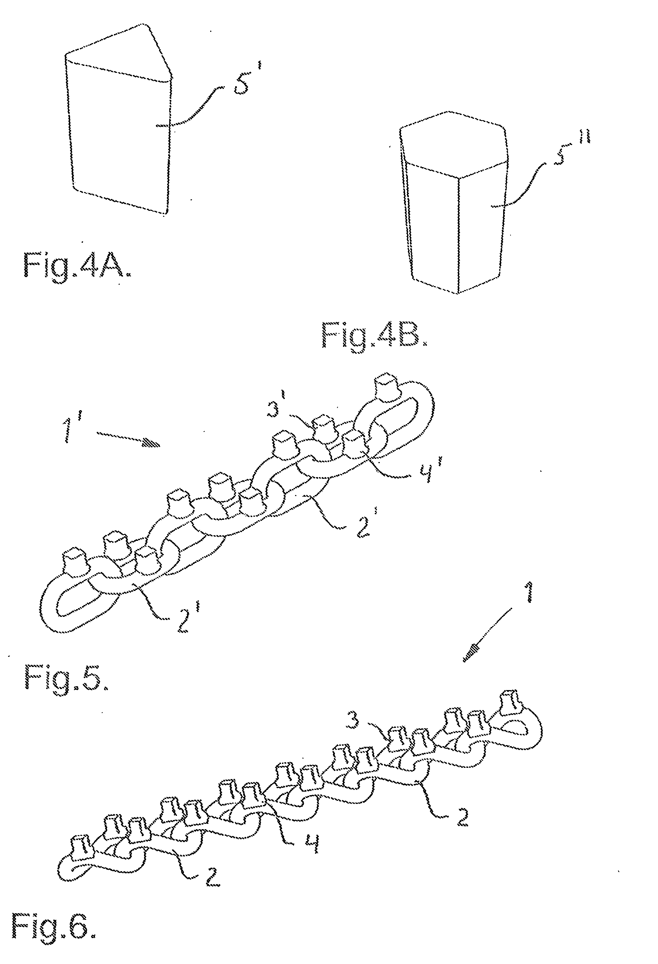

Figure 4A shows a second embodiment of the metal piece 5' in the form of a straight truncated prism, normally severed from a stock of rod steel. As before, the metal piece 5' succeeds to a stud (not shown) when welded to a chain link.

Figure 4B shows a third embodiment of a metal piece 5" in the form of a hexagon, normally cut from a stock of rod steel. As before, the metal piece 5" succeeds to a stud (not shown) when welded to a chain link.

Figure 5 shows a second embodiment of a lateral link 1' of a vehicle traction chain. The lateral link 1' is as before assembled of individual links 2', here an embodiment where the individual links 2' are of straight nature, is shown. Each single link 2' has two studs 3' (also termed spikes) welded thereon. As illustrated, each individual stud 3' has a square configuration like the first embodiment. How each stud 3' is welded to the link 2' can either be random or at predetermined orientation. Normally the studs 3' are welded by electric resistance welding at the actual chain link 2', as indicated, usually limited to the individual links 2' of the lateral links 1'. By the electric resistance welding the studs 3' are, at the end abutting the link 2', melted onto the chain link 2' locally and forms a welding bead 4' of melted metal circumscribing the root of the stud 3' as shown in figure 5.

Figure 6 shows a complete lateral link 1 that figure 1 per se is a section of.

The production takes place in that precisely twisted chain links interlaced into infinite lengths are fed into an automatic stud welding machine and are guided into place at a welding station. The cut studs are placed in a magazine from where a manipulator puts these in place into welding electrodes which urges the studs against the chain links. During this operation an edge of the stud is oriented relative to a chain link in a predetermined direction in the welding electrode. Then, by supplying electric power a resistance welding takes place which forms a melting zone between the studs and the links. Subsequent the welding process the chain is transferred further on to a severing station, where a preset program assists to cut the chain in correct lengths. The cut links are transferred further on to a tempering station that accomplishes the hardening process. Here is a carburization carried out and subsequently quenching in order to obtain desired hardness and wear resistance.

The orientation itself may take place in that the stud is guided forward to the welding electrode through a hollow body, such as a pipe, which has an internal shape that corresponds roughly to the external shape of the stud. As one will understand, this will in particular be of significance proximate to the end of the hollow body where the stud exits.

As an alternative, the orientation may take place in that a manipulator device is used that picks up the studs from a Syntron®. This retains a series of studs that are preoriented in a particular direction. During production these are continuously fed to the welding electrode where they individually are fixed in position during the welding operation.

It is to be mentioned that this orientation primarily has the duty to guide the edged metal pieces repetitive equally to abutment against the chain link so that the welding parameters are equal for each individual metal piece/stud. In addition, the orientation has significance for in which way an edge of the stud is pointing relative to the rolling direction of a wheel, i.e. may have significance for the road traction itself.

## Claims

1. A traction chain for installation onto a vehicle tire in order to increase the traction capacity against the ground, usually during snow and icy road conditions, which traction chain comprises lateral links (1; 1') that in use bear against the tire tread surface and have attached studs (3, 3') protruding outwardly relative to the tire tread, and that each stud is directed substantially in a radial direction relative to the wheel when the chain is mounted onto a vehicle tire **characterized in that** the attached studs (3, 3') have a sharp edged, equilateral polygonal transversal cross section area.

2. The traction chain according to claim 1, **characterized in that** the transversal cross section area is quadratic.

3. The traction chain according to claim 1, **characterized in that** the transversal cross section area is an equilateral triangle.

4. The traction chain according to claim 1, **characterized in that** the transversal cross section area is an equilateral pentagon.

5. The traction chain according to claim 1, **characterized in that** the transversal cross section area is an equilateral hexagon.

6. The traction chain according to any of the claims 1-5, **characterized in that** the stud has a tapered truncated configuration, preferably straight truncated.

7. The traction chain according to any of the claims 1-6, **characterized in that** the stud is installed to the link so that an edge of the stud is pointing in the running direction of the vehicle, or in the rolling direction of the tire, of particular importance for studs having triangular and square cross sectional area.

## Patentansprüche

1. Antriebskette zur Installation an einem Fahrzeugreifen, um die Antriebsfähigkeit gegen den Boden zu erhöhen, üblicherweise bei Schnee und eisigen Straßenverhältnissen, wobei die Antriebskette seitliche Kettenglieder (1; 1') umfasst, welche in Verwendung gegen die Reifenlauffläche drücken und befestigte Spikes (3, 3') aufweisen, welche bezüglich der Reifenlauffläche nach außen hervorstehen, und wobei jeder Spike im Wesentlichen in eine radiale Richtung bezüglich des Rads ausgerichtet ist, wenn die Kette auf einen Fahrzeugreifen montiert ist, **dadurch gekennzeichnet, dass** die befestigten Spikes (3, 3') eine scharfkantige, gleichseitig polygonale Querschnittsfläche aufweisen.

2. Antriebskette nach Anspruch 1, **dadurch gekennzeichnet, dass** die Querschnittsfläche quadratisch ist.

3. Antriebskette nach Anspruch 1, **dadurch gekennzeichnet, dass** die Querschnittsfläche ein gleichseitiges Dreieck ist.

4. Antriebskette nach Anspruch 1, **dadurch gekennzeichnet, dass** die Querschnittsfläche ein gleichseitiges Fünfeck ist.

5. Antriebskette nach Anspruch 1, **dadurch gekennzeichnet, dass** die Querschnittsfläche ein gleichseitiges Sechseck ist.

6. Antriebskette nach einem der Ansprüche 1 bis 5, **dadurch gekennzeichnet, dass** der Spike eine kegelstumpfartige Gestaltung aufweist, vorzugsweise gerade abgeschnitten.

7. Antriebskette nach einem der Ansprüche 1 bis 6, **dadurch gekennzeichnet, dass** der Spike so an das Kettenglied angebracht ist, dass eine Kante des Spikes in die Fahrtrichtung des Fahrzeugs oder in die Rollrichtung des Reifens zeigt, insbesondere bei Spikes mit dreieckiger und quadratischer Querschnittsfläche.

## Revendications

1. Chaîne de traction destinée à être installée sur un pneumatique de véhicule pour augmenter la capacité de traction sur le sol, habituellement pendant des conditions de routes enneigées et verglacées, laquelle chaîne de traction comprend des maillons latéraux (1 ; 1') qui, en utilisation, appuient contre la surface de bande de roulement du pneumatique, et ayant des tenons reliés (3, 3') faisant saillie vers l'extérieur par rapport à la bande de roulement, et chaque tenon est dirigé sensiblement dans une direction radiale par rapport à la roue lorsque la chaîne est montée sur un pneumatique de véhicule, **caractérisée en ce que** les tenons reliés (3, 3') ont une surface en coupe transversale polygonale équilatérale à bord aigu. D

2. Chaîne de traction selon la revendication 1, **caractérisée en ce que** la surface en coupe transversale est quadratique.

3. Chaîne de traction selon la revendication 1, **caractérisée en ce que** la surface en coupe transversale est un triangle équilatéral.

4. Chaîne de traction selon la revendication 1, **caractérisée en ce que** la surface de coupe transversale est un pentagone équilatéral.

5. Chaîne de traction selon la revendication 1, **caractérisée en ce que** la surface en coupe transversale est un hexagone équilatéral.

6. Chaîne de traction selon l'une quelconque des revendications 1 à 5, **caractérisée en ce que** le tenon a une configuration tronquée conique, de préférence tronquée droite.

7. Chaîne de traction selon l'une quelconque des revendications 1 à 6, **caractérisée en ce que** le tenon est installé le maillon de telle sorte qu'un bord du tenon est dirigé dans la direction de déplacement du véhicule, ou dans la direction de roulement du pneumatique, ceci étant d'une importance particulière pour des tenons ayant une surface en coupe transversale triangulaire et carrée.
